# EUROPÄISCHE PATENTSCHRIFT

(11) **EP 0 994 400 B1**
(45) Veröffentlichungstag und Bekanntmachung des Hinweises auf die Patenterteilung: **13.12.2006**
(21) Anmeldenummer: 99120310.0
(22) Anmeldetag: 12.10.1999
(51) Int. Cl.: G05B 19/042, G05B 19/406

(54) **Verfahren und Vorrichtung zum Darstellen von Bedienungsanweisungen**
Method and device to display control instructions
Méthode et dispositif d'affichage d'instructions de commande

(30) Priorität: 16.10.1998 DE 19847894
(43) Veröffentlichungstag der Anmeldung: 19.04.2000
(73) Patentinhaber: Focke & Co. (GmbH & Co. KG), 27283 Verden (DE)
(72) Erfinder: Focke, Heinz, D-27283 Verden (DE); Kaluschke, Jörg, D-28832 Achim (DE)
(74) Vertreter: Bolte, Erich

(56) Entgegenhaltungen:
- EP-A- 0 597 127
- DE-U- 9 214 728
- DE-U- 29 715 458
- US-A- 4 931 950
- US-A- 5 375 063
- US-A- 5 539 869
- DAUDE R ET AL: "HEAD-MOUNTED DISPLAY ALS FACHARBEITERORIENTIERTE UNTERSTUETZUNGSKOMPONENTE AN CNC-WERKZEUGMASCHINEN" WERKSTATTSTECHNIK, SPRINGER VERLAG. BERLIN, DE, Bd. 86, Nr. 5, 1. Mai 1996 (1996-05-01), Seiten 248-252, XP000585192 ISSN: 0340-4544

## Beschreibung

Die Erfindung betrifft ein Verfahren und eine Vorrichtung zum Darstellen von Anweisungen zum Bedienen einer Maschine, insbesondere (Zigaretten-)Verpackungs- und/oder Herstellungsmaschine.

Verpackungs- und Herstellungsmaschinen für Zigaretten weisen einen sehr komplexen Aufbau auf. Eine Vielzahl von Einheiten wirkt zusammen, um Zigaretten und/oder fertige Packungen herzustellen. Bei jeder einzelnen Einheit kann es zu Störungen kommen. Das liegt insbesondere auch an der hohen Produktionsgeschwindigkeit derartiger Maschinen. Als Beispiel sei genannt, dass sich eine Zigarette in der Maschine während des laufenden Verpackungsprozesses quer stellt und somit nachfolgende Zigaretten behindert.

Derartige Störungen müssen schnellstmöglich beseitigt werden. Dazu muß eine Bedienperson Eingriffe in die Maschine vornehmen. Aufgrund der Komplexität der Maschine sind dafür ganz spezielle und auf jeden Einzelfall abgestimmte Handlungen notwendig, die bei herkömmlichen Maschinen nur von eingehend geschultem Personal durchgeführt werden können.

Herkömmlicherweise bedarf es zusätzlich eines umfangreichen Bedienerhandbuches. Dieses steht jedoch nicht immer zur Verfügung, insbesondere kommt es immer wieder vor, dass es sich nicht am vorgesehenen Platz befindet, oder nicht auf dem neusten Stand ist, beispielsweise weil kurzfristig einspielbare Softwareänderungen erst nach Neudruck entsprechender Seiten im Handbuch Berücksichtigung finden. Insbesondere ist aber die Handhabung derartiger Handbücher umständlich, zeitraubend und damit teuer, insbesondere wenn die aufgetretene Störung zum Maschinenstillstand geführt hat.

Die Schrift DAUDE R ET AL: "Head-mounted display als facharbeiterorientierte Unterstützungskomponente an CNC-Werkzeugmaschinen", Werksiattstechnik, Springer Verlag. Berlin, DE, Bd. 86, Nr. 5, 1. Mai 1996 (1996-05-01), Seiten 248-252, XP000585192 ISSN: 0340-4544 zeigt ein Verfahren zum Darstellen von Anweisungen zum Bedienen einer CNC-Werkzeugmaschine, wobei Videosequenzen auf einem mit der Maschinensteuerung verbundenen Bildschirm, insbesondere Head-up-Display, abgespielt werden. Dabei kann die Videosequenzübertragung drahtlos erfolgen. Bei dieser Lösung ist nicht vorgesehen, bei Einsatz mehrerer benachbarter Werkzeugmaschinen den jeweiligen Bedienem unterschiedliche, benutzerspezifische Informationen drahtlos zu übermittelen.

Der Erfindung liegt das Problem zugrunde, die eingangs genannten Maschinen derart zu verbessern, dass dem Bediener die Handhabung der Maschine erleichtert wird.

Zur Lösung dieses Problems wird ein Verfahren zum Darstellen von Anweisungen von Bedienen einer Zigarettenverpackungs- und/oder Herstellungsmaschine angegeben, wobei beim Darstellen der Anweisungen Videosequenzen auf einem mit einer Maschinensteuerung verbundenen Bildschirm abgespielt werden und wobei bei drahtloser Übertragung der Ton- und/oder Videosequenz auf einen Kopfhörer bzw. ein Head-up-Display einer von mehreren Kanälen, insbesondere eine von mehreren Frequenzen, einer von mehreren Zeitschlitzen und/oder einer von mehreren Codes, ausgewählt wird, der von anderen ortsnah untergebrachten Maschinen nicht verwendet wird.

Eine erfindungsgemäße Vorrichtung zum Darstellen von Anweisungen zum Bedienen einer Maschine, insbesondere (Zigaretten-)Verpackungs- und/oder Herstellungsmaschine, ist mit einer Steuerung, einem Visualisierungsmodul, einer Datenbank und einem Bildschirm versehen, wobei in der Datenbank Videosequenzen abgespeichert sind, die in Abhängigkeit einer Auswahleinrichtung und/oder von mittels der Steuerung erkannten Maschinenzuständen aufrufbar und über das Visualisierungsmodul auf dem Bildschirm darstellbar sind, wobei Mittel zum Auswählen eines von mehreren Kanälen, Zeitschlitzen und/oder eines von mehreren Codes vorgesehen sind, derart, dass ein von anderen ortsnah untergebrachten Maschinen verwendeter Kanal nicht verwendet wird.

Das Abspielen derartiger Videosequenzen in Abhängigkeit beispielsweise einer Fehlermeldung oder durch Betätigen einer entsprechenden Auswahleinrichtung ermöglicht es den Bediener der Maschine direkt vor Ort an der Maschine die nötigen Handgriffe durchführen zu können, ohne langwierig umfangreiche Handbücher studieren zu müssen. Außerdem erhält der Bediener ein direktes Bild der sich vor ihm befindenden Maschine und sieht genau welche Handgriffe er wie und wo durchzuführen hat. Dies erleichtert die Störungsbeseitigung aber auch die Wartung der Maschine erheblich.

Bevorzugt wird neben dem Video auch eine kurze schriftliche Beschreibung des jeweiligen Fehlers und/oder der durchzuführenden Handlungen auf dem Bildschirm wiedergegeben. Dabei kann die Bildschirmseite unterteilt sein, so daß die Videosequenz in einem Teil und die textliche Wiedergabe in einem anderen Teil der Bildschirmseite wiedergegeben wird.

Besonders bevorzugt erfolgt die Wiedergabe einer derartigen Videosequenz mit Ton. Dabei kann der Ton auf einen von der Bedienperson getragenen Kopfhörer übertragen oder von einem Lautsprecher wiedergegeben werden. Die Übertragung des Tons zum Kopfhörer kann insbesondere drahtlos erfolgen.

Außerdem ist bevorzugt vorgesehen, die Tonwiedergabe und die schriftliche Beschreibung auf dem Bildschirm in verschiedenen Sprachen wiederzugeben und zwar nach Auswahl durch den Benutzer.

Weitere Einzelheiten der Erfindung ergeben sich aus den Unteransprüchen und anhand der in der Zeichnung dargestellten Ausführungsbeispiele, wobei die Vorrichtungen insbesondere zum Durchführen der Verfahren dienen. In der Zeichnung zeigen:
- Fig. 1: den Aufbau einer Bildschirmseite mit einer Liste von Fehlermeldungen,
- Fig. 2: den Aufbau einer Bildschirmseite mit einem Fenster für die Darstellung einer Videosequenz,
- Fig. 3: ein Blockdiagramm zur schematischen Darstellung einer Vorrichtung gemäß einem Ausführungsbeispiel der Erfindung, und
- Fig. 4: ein Blockdiagramm zur schamatischen Darstellung einer Vorrichtung gemäß einem weiteren Ausführungsbeispiel der Erfindung.

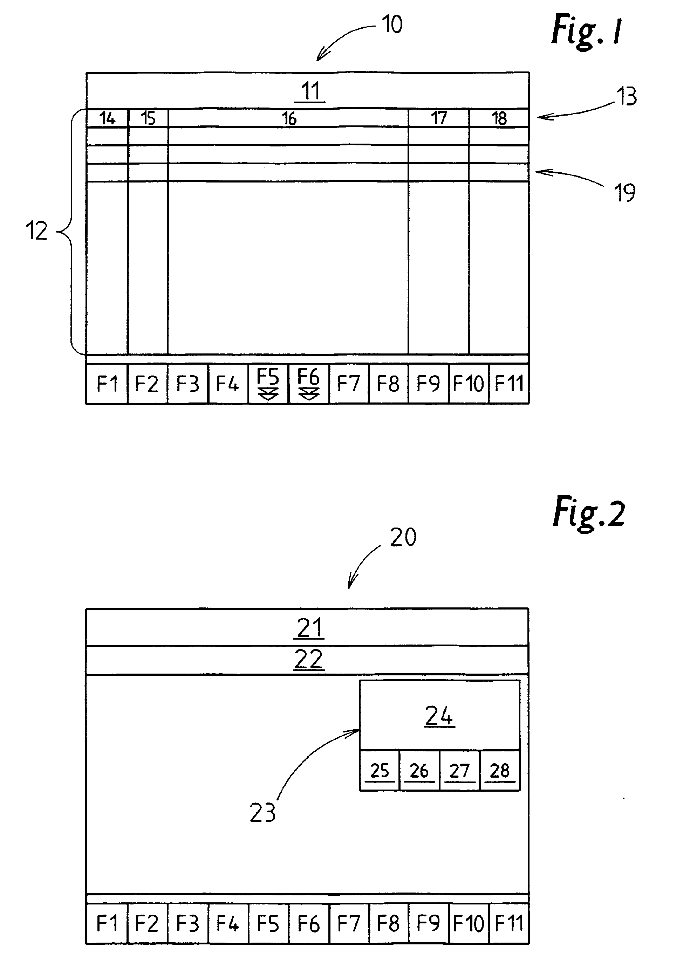

Fig. 1 zeigt eine Bildschirmseite 10 nach dem Auftreten eines Fehlers. In einem oberen Feld 11 der Bildschirmseite 10 wird schlagwortartig der ursächliche Fehler bezeichnet. Aus einem derartigen, ersten Fehler kann sich eine Reihe von Folgefehlern ergeben. Die Folgefehler sind in der darunter liegenden Liste, nämlich der Tabelle 12, aufgelistet.

Die Tabelle 12 besteht aus einer Kopfzeile 13, die aus fünf Feldern 14, 15, 16, 17, 18 besteht. Im Feld 14 ist der Maschinentyp, im Feld 15 eine fortlaufende Fehlernummerierung, im Feld 16 eine Kurzbeschreibung des Folgefehlers, im Feld 17 die dazugehörige Uhrzeit und im Feld 18 eine kurze Bezeichnung des betroffenen Maschinenbauteils angegeben.

Diese Liste kann unter Umständen relativ lang sein, so daß die Höhe einer Bildschirmseite 10 nicht ausreicht. In einem unteren Teil der Bildschirmseite sind Funktionstasten F1, F2, F3, ..., F11 dargestellt. Die Funktionstaste F5 dient dazu in der Liste nach oben und die Funktionstaste F6, in der Liste nach unten zu blättern. Auf diese Weise kann man sehr einfach sämtliche Fehler bzw. Folgefehlermeldungen auf einer Bildschirmseite darstellen.

Die anderen Funktionstasten sind mit weiteren nützlichen Funktionen belegt. Beispielsweise kann man über diese Funktionstasten Hilfe bzw. Erläuterungen erhalten oder auch die betreffende Seite bzw. das Programm verlassen.

Mittels eines geeigneten Zeigegeräts, beispielsweise einer nicht dargestellten Maus, oder durch den Einsatz sogenannter Touch-Screen-Monitore kann man eine bestimmte Zeile der Liste beispielsweise die Zeile 19 auswählen und bekommt eine weitere Bildschirmseite mit genaueren Informationen zu diesem Fehler.

Fig. 2 zeigt die nach Auswahl der Zeile 19 (gemäß Fig. 1) erhaltene Bildschirmseite 20. Wiederum ist auch auf dieser Bildschirmseite 20 ein Feld 21 mit einer Kurzbeschreibung des Fehlers vorhanden. Dieses Feld 21 entspricht dem Feld 11 der Bildschirmseite 10 gemäß Fig. 1 und enthält die gleichen Angaben. In der darunter liegenden Zeile 22 befindet sich die Kurzbeschreibung des Ereignisses gemäß Feld 16 der Bildschirmseite 10.

Ferner befindet sich ein sogenannter Videoplayer 23, d.h. ein Modul zum Abspielen und Darstellen von Videos, auf dieser Bildschirmseite. Dieser Videoplayer 23 enthält einen Bereich 24 zum Darstellen der abgespielten Videosequenz.

Ferner enthält der Videoplayer 23 Schaltflächen 25, 26, 27, 28. Diese Schaltflächen dienen unter anderem zum Vergrößern bzw. Verkleinern des Bereichs 24. Auf diese Weise kann man den das Video wiedergebenden Bereich 24 vergrößern bzw. verkleinern. Insbesondere kann man auch eine Vollbild-Ansicht wählen, welche die darzustellende Videosequenz auf dem gesamten Bildschirm darstellt. Die Vollbild-Darstellung ist insbesondere dafür vorteilhaft, Einzelheiten besser darstellen zu können. Dies ist insbesondere dann von Vorteil, wenn die zu behandelnde Fehlerstelle der Maschine sich in einigem Abstand zum Bildschirm befindet. Je größer dann das Bild ist, desto besser kann der Bediener die entsprechenden Anweisungen auch erkennen, selbst wenn er nicht unmittelbar vor dem Bildschirm, sondern vor der Fehlerstelle der Maschine steht.

Die Schaltflächen 25 bis 28 dienen ferner der Steuerung des Videoplayers. Insbesondere sind Schaltflächen vorgesehen, um eine Videosequenz zu starten, zu stoppen, zu pausieren, schnell vor- oder zurückzuspulen, sowie an den Anfang oder das Ende der Videosequenz zu springen.

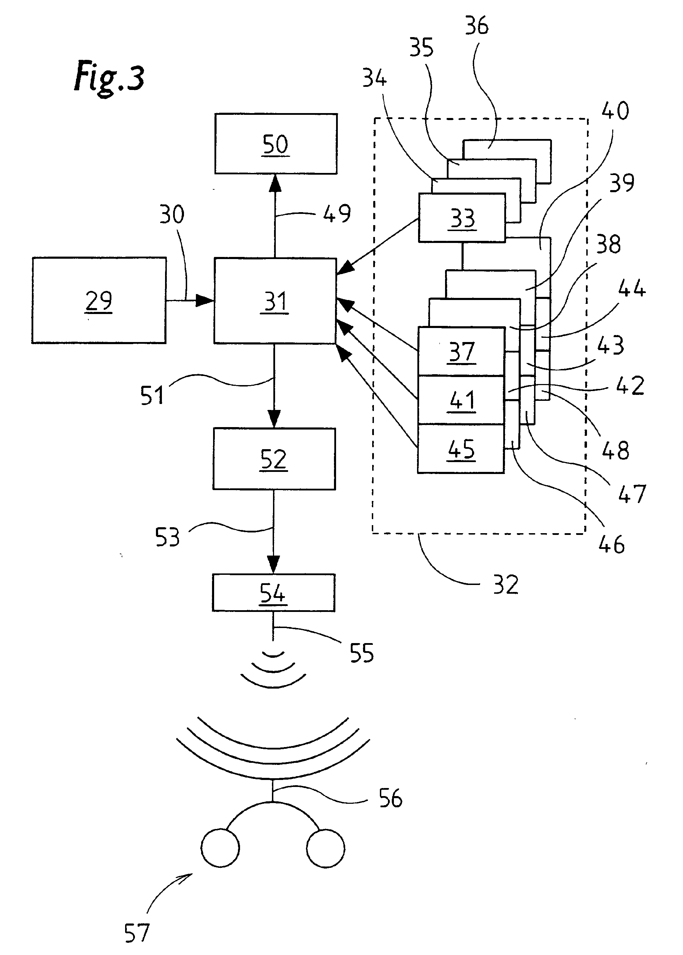

Fig. 3 zeigt in schematischer Darstellung die Funktionsblöcke einer Vorrichtung gemäß der Erfindung. Eine Steuerung 29 erkennt einen eventuellen Fehler und leitet eine entsprechende Meldung über eine Verbindung 30 an das Visualisierungsmodul 31 weiter. Das Visualisierungsmodul 31 greift auf eine Datenbank 32 zu.

Die Datenbank 32 enthält eine Vielzahl von Videodateien 33, 34, 35, 36 sowie zu jeder dieser einzelnen Videodateien eine Mehrzahl von Audiodateien 37 bis 48. Beispielsweise sind der Videodatei 33 die Audiodateien 37, 41, 45 zugeordnet. Diese Audiodateien 37, 41, 45 enthalten den zur Videodatei 33 gehörigen Ton und zwar in verschiedenen Sprachen. Jede Audiodatei 37, 41, 45 repräsentiert eine Sprache. So kann beispielsweise das Video zur Videodatei 33 wahlweise in deutsch, englisch oder japanisch wiedergegeben werden.

Die vom Visualisierungsmodul 31 ausgewählte Videodatei gelangt über eine Verbindung 49 zum Bildschirm 50 und wird dort als Teilbild oder Vollbild dargestellt, so wie oben mit Bezug auf Fig. 2 erläutert.

Die Tonsignale der Audiodateien 37 bis 48 gelangen über eine weitere Verbindung 51 an eine Audioeinheit 52. Diese Audioeinheit 52 kann beispielsweise eine sogenannte Sound-Karte sein. Die Audioeinheit 52 steht über eine Verbindung 53 mit einer Sendeeinrichtung 54 in Verbindung. Diese Sendeeinrichtung 54 weist eine Antenne 55 auf. Diese Sendeeinrichtung samt Antenne 55 dient der Drahtlosübertragung der Audiosignale bzw. der gesprochenen Anweisungen zu einem mit einem Empfangsteil, insbesondere einer Antenne 56, versehenen Kopfhörer 57. Dieser Kopfhörer 57 wird von der Bedienperson getragen.

Da häufig die hier angesprochenen Verpackungs- bzw. Herstellungsmaschinen für Zigaretten in einer geräuschvollen Umgebung aufgestellt sind, wird der zu einer Videosequenz gehörende Ton vorteilhaft direkt auf einen Kopfhörer übertragen. Dies erhöht die Verständlichkeit des Tons. Darüber hinaus kann der Kopfhörer jedoch auch in einem Gehörschutz, insbesondere einem Gehörschutzhelm, untergebracht sein, der Störgeräusche abschirmt.

Die (drahtlose) Übertragung der Audiosignale von der Sendeeinrichtung 54 zum Kopfhörer 57 erfolgt über einen auswählbaren Kanal. Die Auswahl erfolgt mittels einer Auswahleinrichtung, die eine eventuelle Kanalbelegung durch andere ortsnah, bspw. in der selben Werkshalle, untergebrachte Maschinen erkennt und die belegten Kanäle meidet. Unter "Kanal" ist jede Frequenz bzw. Trägerfrequenz, jeder Zeitschlitz und/oder Code eines Frequenz-, Zeit- und/oder Codemultiplex-Übertragungssystem zu verstehen. Dadurch daß dieser Kanal variierbar ist, kann man in einer Werkshalle eine Vielzahl von Systemen aufbauen, ohne daß sie sich untereinander stören. Dabei wird nämlich jedem System ein anderer Kanal zugeordnet. Auf diese Weise ist sichergestellt, daß jeder Bedienperson nur die Signale der eigenen Maschine auf ihren Kopfhörer 57 übertragen werden.

Das in den Figuren beschriebene System erläutert ein System zur Wiedergabe von Bedienungsanweisungen im Falle von Maschinenstörungen. Das erfindungsgemäße System (Vorrichtung und Verfahren) ist jedoch nicht auf die Fehlerbehebung beschränkt, sondern kann derartige Bedienungsanweisungen auch auf Anforderung der Bedienperson ausgeben, beispielsweise im Falle von Wartungsmaßnahmen.

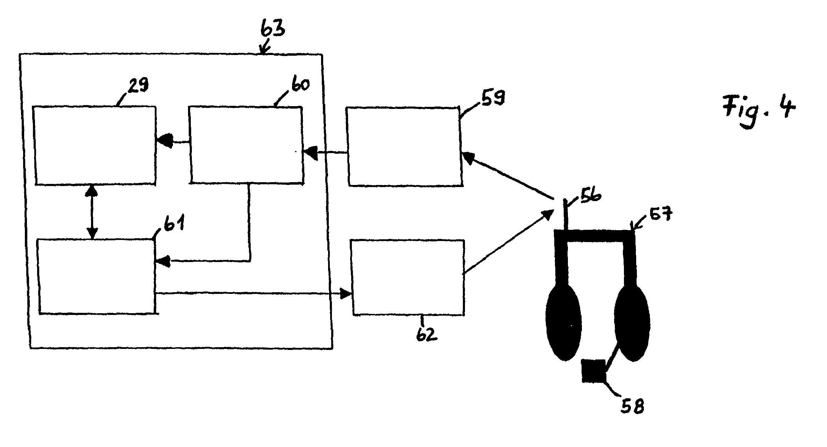

Fig. 4 zeigt ein solches System, das auch auf Anforderung der Bedienpersonen Bedienungsanweisungen ausgibt. Dieses System wird hierzu durch Spracheingabe gesteuert. Der drahtlos über eine Antenne 56 betriebene Kopfhörer 57 weist zusätzlich ein Mikrofon 58 auf. In dieses Mikrofon 58 kann eine Bedienperson Anweisungen hineinsprechen, die mittels der Antenne 56 an eine Empfangseinheit 59 übertragen werden. Die Empfangseinheit 59 ist mit einer Sprachauswerteeinheit 60 verbunden, die den gesprochenen Befehl auswertet. Dieser gesprochene Befehl kann bereits in der Kopfhörer-Mikrofoneinheit 57, 58 vorverarbeitet worden sein. Er ist insbesondere in elektromagnetische Wellen für eine drahtlose Übertragung zwischen der Kopfhörer-Mikrofoneinheit und der Empfangseinheit 59 umgewandelt worden.

Die Sprachauswerteeinheit 60 erkennt eine Spracheingabe und wählt in Abhängigkeit der erkannten Spracheingabe einen Maschinensteuerbefehl aus, der die Maschine zu weiteren Aktionen veranlasst. Insbesondere kann durch diesen Maschinensteuerbefehl ein Visualisierungsmodul 61 veranlaßt werden, bestimmte Videosequenzen auf den Bildschirm zu geben bzw. bestimmte Tonsequenzen über eine Sendeeinheit 62 an den Kopfhörer 57 zu übertragen.

Der Maschinensteuerbefehl kann die Maschine auch in einen anderen Zustand überführen. Beispielsweise kann er die Steuerung 29 veranlassen, die Maschine zu starten, zu stoppen, in einen Test- oder Service-Zustand oder weitere Zustände zu überführen. Je nach (ausgewähltem) Zustand veranlasst die Steuerung 29 wiederum das Visualisierungsmodul 61 zur Ausgabe von Video-und/oder Tonsequenzen über die Sendeeinheit 62.

Insbesondere ist das System von einem Warte-Zustand in einen Empfangsbereitschafts-Zustand überführbar. Der Wartezustand liegt in der Regel dann vor, wenn keine Kommunikation zwischen der Bedienperson und der Maschine durchgeführt wird. Dieser Wartezustand kann durch Sprechen einer maschinenindividuellen Kennung in den Empfangsbereitschafts-Zustand überführt werden, in dem die Maschine für weitere Spracheingaben annahmebereit ist.

Dieser Zustandswechsel in Abhängigkeit einer besonderen maschinenindividuellen Kennung ist insbesondere dann wichtig, wenn mehrere Maschinen ortsnah (in einer Werkshalle) untergebracht sind. Da die Übertragung vorzugsweise drahtlos erfolgt, könnte es nämlich vorkommen, daß ein von einer Bedienperson gesprochener Befehl durch die Drahtlosübertragung an eine falsche Maschine gelangt. Dies könnte zu Fehlfunktionen kommen. Um dies zu vermieden, wird eine Kommunikation zwischen Bedienperson und der Maschine nur dann aufgebaut, wenn die Bedienperson einleitend die maschinenindivuduelle Kennung ausspricht. In Reaktion hierauf gelangt die angesprochene Maschine in den Empfangsbereitschaft-Zustand und wählt für die dann folgende Kommunikation einen geeigneten Kanal aus, der von den anderen ortsnah untergebrachten Maschinen nicht verwendet wird. Hierzu weist die Maschine Kanalbelegungserkennungsmittel auf.

Damit ein Kanal nicht beliebig lang blockiert wird, wird der Empfangsbereitschaft-Zustand nach Ablauf einer vorgegebenen Wartezeit, nach Empfang einer bestimmten Anzahl weiterer Spracheingaben und/oder nach Empfang einer definierten Spracheingabe wieder in den Warte-Zustand überführt. Dadurch wird der belegte Kanal wieder freigegeben und steht anderen Maschinen zur Verfügung.

Die Kopfhörer-Mikrofoneinheit 57, 58 kann zusätzlich ein (nicht dargestelltes) Head-up-Display aufweisen. Hierbei handelt es sich um einen an der Kopfhörer-Mikrofoneinheit 57, 58 angeordneten mobilen Bildschirm, der insbesondere nach Art eines Visiers vor das Gesichtsfeld der Bedienperson schwenkbar ist. Vorteilhafterweise ist dieser Bildschirm auch lichtdurchlässig, so daß sowohl die Videosequenz als auch die tatsächliche Umgebung zu sehen ist. Unter dem Begriff Bildschirm ist im Zusammenhang mit der Erfindung daher nicht nur ein Monitor, sondern auch ein derartiges Head-up-Display zu verstehen.

Die Sprachauswerteeinheit 60, das Visualisierungsmodul 61 sowie die Steuerung 29 sind vorzugsweise in einem maschinenseitigen Rechner 63 untergebracht. Insbesondere die in Verbindung mit Fig. 3 und 4 beschriebenen Komponenten, wie das Visualisierungsmodul 31, die Datenbank 32 und die Audioeinheit 52, lassen sich idealerweise auf einem Industrie-PC (Personal Computer) verwirklichen. Dabei kann auch die Steuerung 29 auf dem PC laufen.

Die Video- und Audiodateien lassen sich auf in derartigen PCs verwendeten Massenspeichern, wie Festplatten oder CD-ROM, ablegen. Sie erlauben einen sehr schnellen Zugriff auf diese Dateien. Gegenüber herkömmlichen Videokassetten ist der Zugriff wesentlich schneller, da nicht erst zu der zu einem Fehler entsprechenden Sequenz gespult werden muß, sondern bei derartigen modernen Massenspeichern direkt auf die jeweilige Datei zugegriffen werden kann. Die Videodateien werden bevorzugt im MPEG-oder AVI-Format abgelegt.

Durch die Videounterstützung der Maschinenbedienung, insbesondere der Bedienung von komplexen Verpackungs- und Herstellungsmaschinen in der Zigarettenindustrie, erleichtert man der Bedienperson die Störungsbeseitigung bzw. Handhabung der Maschine bei Wartungsmaßnahmen erheblich. Die erleichterte Handhabung führt zu einer Verkürzung eventueller Maschinen-Ausfallzeiten und erhöht damit auch die Maschineneffizienz. Insbesondere erreicht man diese erleichterte Handhabung durch die beschriebene bidirektionale Kommunikationseinrichtung zwischen Bedienperson und Maschine, ein Head-up-Display mit Mikrofon zur audiovisuellen Kommunikation mit der Maschine, die Drahtlosübertragung zwischen Bedienperson und Maschine mit Auswahl eines von anderen ortsnah untergebrachten Maschinen nicht verwendeten Kanals sowie den sprachgesteuerten Abruf von Ton- und/oder Videosequenzen durch die Bedienperson.

### Bezugszeichenliste:

- 10: Bildschirmseite
- 11: Feld
- 12: Tabelle
- 13: Kopfzeile
- 14: Feld
- 15: Feld
- 16: Feld
- 17: Feld
- 18: Feld
- 19: Zeile
- 20: Bildschirmseite
- 21: Feld
- 22: Zeile
- 23: Videoplayer
- 24: Bereich
- 25: Schaltfläche
- 26: Schaltfläche
- 27: Schaltfläche
- 28: Schaltfläche
- 29: Steuerung
- 30: Verbindung
- 31: Visualisierungsmodul
- 32: Datenbank
- 33: Videodatei
- 34: Videodatei
- 35: Videodatei
- 36: Videodatei
- 37: Audiodatei
- 38: Audiodatei
- 39: Audiodatei
- 40: Audiodatei
- 41: Audiodatei
- 42: Audiodatei
- 43: Audiodatei
- 44: Audiodatei
- 45: Audiodatei
- 46: Audiodatei
- 47: Audiodatei
- 48: Audiodatei
- 49: Verbindung
- 50: Bildschirm
- 51: Verbindung
- 52: Audioeinheit
- 53: Verbindung
- 54: Sendeeinrichtung
- 55: Antenne
- 56: Antenne
- 57: Kopfhörer
- 58: Mikrofon
- 59: Empfangseinheit
- 60: Sprachauswerteeinheit
- 61: Visualisierungsmodul
- 62: Sendeeinheit
- 63: Rechner
- F1: Funktionstaste
- F2: Funktionstaste
- F3: Funktionstaste
- F4: Funktionstaste
- F5: Funktionstaste
- F6: Funktionstaste
- F7: Funktionstaste
- F8: Funktionstaste
- F9: Funktionstaste
- F10: Funktionstaste
- F11: Funktionstaste

## Patentansprüche

1. Verfahren zum Darstellen von Anweisungen zum Bedienen einer Zigarettenverpackungs- und/oder Herstellungsmaschine, wobei beim Darstellen der Anweisungen Videosequenzen auf einem mit einer Maschinensteuerung (29) verbundenen Bildschirm (24; 50) abgespielt werden, **dadurch gekennzeichnet, dass** bei drahtloser Übertragung der Ton- und/oder Videosequenz auf einen Kopfhörer (57) bzw. ein Head-up-Display einer von mehreren Kanälen, insbesondere eine von mehreren Frequenzen, einer von mehreren Zeitschlitzen und/oder einer von mehreren Codes, ausgewählt wird, der von anderen ortsnah untergebrachten Maschinen nicht verwendet wird.

2. Verfahren nach Anspruch 1, **dadurch gekennzeichnet, dass** die Anweisungen in Abhängigkeit von einer Spracheingabe ausgewählt werden.

3. Verfahren nach Anspruch 2, **dadurch gekennzeichnet, dass** die Maschine in Reaktion auf eine Spracheingabe mit maschinenindividueller Kennung in einen Empfangsbereitschaft-Zustand zur Annahme wenigstens einer weiteren Spracheingabe überführt wird.

4. Verfahren nach einem der Anspruch 2 oder 3, **dadurch gekennzeichnet, dass** die Maschine nach Ablauf einer Wartezeit, nach Empfang einer bestimmten Anzahl weiterer Spracheingaben und/oder nach Empfang einer vorbestimmten, das Ende der erfolgten Spracheingabe(n) anzeigenden Spracheingabe in einen Warte-Zustand überführt wird, in dem die Maschine nur in Reaktion auf die maschinenindividuelle Kennung in den Empfangsbereitschaft-Zustand überführbar ist.

5. Verfahren nach einem der vorhergehenden Ansprüche**, dadurch gekennzeichnet, dass** die Maschine in Abhängigkeit einer Spracheingabe in einen der Spracheingabe entsprechenden Zustand, insbesondere einen Start-, Stop-, Test- und/oder Service-Zustand, überführt wird.

6. Verfahren nach einem der vorhergehenden Ansprüche, **dadurch gekennzeichnet, dass** die Anweisungen in Abhängigkeit von Maschinenzuständen, insbesondere Fehlerzuständen, ausgewählt werden, wobei einem Zustand eine oder mehrere den Zustand betreffende Anweisungen zugeordnet sind.

7. Verfahren nach einem der vorhergehenden Ansprüche, **dadurch gekennzeichnet, dass** synchron mit den Videosequenzen als Datei (37 - 48) auf einem Massenspeicher, insbesondere einer Festplatte oder einer CD-ROM, abgespeicherte Tonsequenzen wiedergegeben werden.

8. Verfahren nach Anspruch 7, **dadurch gekennzeichnet, dass** eine von mehreren einer Videosequenz zugeordneten, verschiedensprachigen Tonsequenzen anhand der von der Bedienperson vorgegebenen Sprache ausgewählt wird.

9. Vorrichtung zum Darstellen von Anweisungen zum Bedienen einer Zigarettenverpackungs- und/oder Herstellungsmaschine, mit einer Steuerung (29), einem Visualisierungsmodul (31), einer Datenbank (32) und einem Bildschirm (50), wobei in der Datenbank (32) Videosequenzen abgespeichert sind, die in Abhängigkeit einer Auswahleinrichtung und/oder von mittels der Steuerung (29) erhaltenen Maschinenzuständen aufrufbar und über das Visualisierungsmodul (31) auf dem Bildschirm (50) darstellbar sind, **gekennzeichnet durch** Mittel zum Auswählen eines von mehreren Kanälen, insbesondere einer von mehreren Frequenzen, eines von mehreren Zeitschlitzen und/oder eines von mehreren Codes, derart, dass ein von anderen ortsnah untergebrachten Maschinen verwendeter Kanal nicht verwendet wird.

10. Vorrichtung nach Anspruch 9, **dadurch gekennzeichnet, dass** sie eine Empfangseinheit (59) zum Empfangen einer, ggf. vorverarbeiteten, Spracheingabe und eine Sprachauswerteeinheit (60) zum Erzeugen wenigstens eines der Spracheingabe entsprechenden Maschinensteuerbefehls aufweist.

11. Vorrichtung nach Anspruch 9 oder 10, **dadurch gekennzeichnet, dass** das Visualisierungsmodul (61) mit der Sprachauswerteeinheit (60) verbunden ist, um in Abhängigkeit von einem erhaltenen Maschinensteuerbefehl eine Ton- und/oder Videosequenz auszuwählen

12. Vorrichtung nach einem der Ansprüche 9 bis 11, **dadurch gekennzeichnet, dass** das Visualisierungsmodul (61) mit einer Sendeeinheit (62) zum Übertragen von akustischen und/oder visuellen Anweisungen an einen von einer Bedienperson tragbaren, insbesondere drahtlosen, Empfänger, insbesondere einen Kopfhörer (57) und/oder ein Head-up-Display, verbunden ist.

13. Vorrichtung nach einem der Ansprüche 9 bis 12, **gekennzeichnet durch** eine Sende- und/oder eine Empfangseinheit, die im Frequenz-, Zeit- und/oder Codemultiplex betreibbar ist.

## Claims

1. Method for displaying instructions for operating a cigarette packaging and/or manufacturing machine, wherein, for the display of the instructions, video sequences are played back on a screen (24; 50) connected to a machine controller (29), **characterized in that** for wireless transmission of the sound and/or video sequence on an earpiece (57) or head-up display respectively, one of several channels, in particular one of several frequencies, one of several time slots and/or one of several codes is selected, which is not used by other machines installed in proximity.

2. Method according to Claim 1, **characterized in that** the instructions are selected dependent on a voice input.

3. Method according to Claim 2, **characterized in that** in response to a voice input with a code individual to the machine, this machine is switched into the ready-to-receive state for the acceptance of at least one further voice input.

4. Method according to one of Claims 2 or 3, **characterized in that** after the expiry of a waiting time, after receipt of a certain number of further voice inputs and/or after receipt of a predetermined voice input signalling the end of the voice inputs, the machine is switched to a standby state, in which the machine can only be switched to the ready-to-receive state in response to the machine's individual code.

5. Method according to one of the preceding claims, **characterized in that**, depending on a voice input, the machine is put into a state corresponding to the voice input, in particular a start, stop, test and/or service state.

6. Method according to one of the preceding claims, **characterized in that** the instructions are selected dependent on machines states, in particular error states, one or more instructions relating to the state being assigned to a state.

7. Method according to one of the preceding claims, **characterized in that** sound sequences stored as a file (37 - 48) on a mass storage unit, in particular a hard disk or a CD-ROM, are played back synchronously with the video sequences.

8. Method according to Claim 7, **characterized in that** one of several different-language sound sequences assigned to a video sequence is selected using the language preset by the operator.

9. Device for displaying instructions for operating a cigarette packaging and/or manufacturing machine, with a controller (29), a visualization module (31), a database (32) and a screen (50), the database (32) holding stored video sequences which, depending on a selection device and/or on machine statuses obtained by means of the controller (29), can be called up and displayed on the screen (50) via the visualization module (31), **characterized by** means of selecting one of several channels, in particular one of several frequencies, one of several time slots and/or one of several codes, such that a channel which is used by other machines installed in proximity is not used.

10. Device according to Claim 9, **characterized in that** it has a receiver unit (59) for receiving a possibly pre-processed voice input, and a speech evaluation unit (60) for generating at least one machine control command corresponding to the voice input.

11. Device according to Claim 9 or 10, **characterized in that** the visualization module (61) is connected to the speech evaluation unit (60), in order to select a sound and/or video sequence depending on a received machine control command.

12. Device according to one of Claims 9 to 11, **characterized in that** the visualization module (61) is connected to a send unit (62) for transmitting acoustic and/or visual instructions to a receiver, in particular wireless, which can be worn by an operator, said receiver being in particular an earpiece (57) and/or a head-up display.

13. Device according to one of Claims 9 to 12, **characterized by** a send and/or a receiver unit, which can be operated in frequency-, time- and/or code-division multiplex.

## Revendications

1. Procédé pour représenter des instructions d'utilisation d'une machine d'emballage et/ou de fabrication de cigarettes, des séquences vidéo étant lues sur un écran (24 ; 50) relié à une commande de machine (29) lors de la représentation des instructions, **caractérisé en ce que** lors de la transmission sans fil de la séquence audio et/ou vidéo à un casque (57) ou à un collimateur d'affichage, un canal qui n'est pas utilisé par les autres machines installées à proximité est choisi parmi plusieurs, notamment une fréquence parmi plusieurs, un créneau temporel parmi plusieurs et/ou un code parmi plusieurs.

2. Procédé selon la revendication 1, **caractérisé en ce que** les instructions sont choisies en fonction d'une saisie vocale.

3. Procédé selon la revendication 2, **caractérisé en ce que** la machine, en réaction à une saisie vocale avec identifiant individuel de la machine, est amenée dans un état prêt à la réception pour accepter au moins une saisie vocale supplémentaire.

4. Procédé selon l'une des revendications 2 ou 3, **caractérisé en ce que** la machine, après écoulement d'un temps d'attente, après 1a réception d'un nombre donné de saisies vocales supplémentaires et/ou après la réception d'une saisie vocale prédéfinie signalant la fin de la ou des saisies vocales effectuées, est amenée dans un état d'attente dans lequel la machine ne peut être amenée dans l'état prêt à la réception qu'en réaction à l'identifiant individuel de la machine.

5. Procédé selon l'une des revendications précédentes, **caractérisé en ce que** la machine est amenée dans un état correspondant à la saisie vocale, notamment un état de démarrage, d'arrêt, de test et/ou d'entretien, en fonction d'une saisie vocale.

6. Procédé selon l'une des revendications précédentes, **caractérisé en ce que** les instructions sont sélectionnées en fonction des états de la machine, notamment des états de défaut, une ou plusieurs instructions concernant un état étant associée(s) à cet état.

7. Procédé selon l'une des revendications précédentes, **caractérisé en ce que** des séquences audio enregistrées sous forme de fichier (37 - 48) sur une mémoire de masse, notamment un disque dur ou un CD-ROM, sont reproduites de manière synchrone avec les séquences vidéo.

8. Procédé selon la revendication 7, **caractérisé en ce qu'**une séquence audio sélectionnée parmi plusieurs dans différentes langues, associées à une séquence vidéo, est sélectionné au moyen de la langue prédéfinie par l'opérateur.

9. Dispositif pour représenter des instructions d'utilisation d'une machine d'emballage et/ou de fabrication de cigarettes, comprenant une commande (29), un module de visualisation (31), une base de données (32) et un écran (50), des séquences vidéo étant enregistrées dans la base de données (32), lesquelles peuvent être invoquées en fonction d'un dispositif de sélection et/ou d'états de la machine obtenus au moyen de la commande (29) et peuvent être représentées sur l'écran (50) par le biais du module de visualisation (31), **caractérisé par** des moyens de sélection d'un canal parmi plusieurs, notamment une fréquence parmi plusieurs, un créneau temporel parmi plusieurs et/ou un code parmi plusieurs de manière à ne pas utiliser un canal utilisé par les autres machines installées à proximité.

10. Dispositif selon la revendication 9, **caractérisé en ce qu'**il présente une unité de réception (59) pour recevoir une saisie vocale éventuellement prétraitée et une unité d'interprétation de la parole (60) pour générer au moins une instruction de commande de la machine correspondant à la saisie vocale.

11. Dispositif selon la revendication 9 ou 10, **caractérisé en ce que** le module de visualisation (61) est relié avec l'unité d'interprétation de la parole (60) afin de sélectionner une séquence audio et/ou vidéo en fonction d'une instruction de commande de la machine reçue.

12. Dispositif selon l'une des revendications 9 à 11, **caractérisé en ce que** le module de visualisation (61) est relié avec une unité d'émission (62) pur transmettre des instructions sonores et/ou visuelles à un récepteur pouvant être transporté par un opérateur, notamment sans fil, notamment un casque (57) et/ou un collimateur d'affichage.

13. Dispositif selon l'une des revendications 9 à 12, **caractérisé par** une unité d'émission et/ou de réception qui peut fonctionner en multiplexage en fréquence, en temps et/ou en code.
